# EUROPEAN PATENT APPLICATION

(11) **EP 4 400 072 A1**
(43) Date of publication of application: **17.07.2024**
(21) Application number: 21963064.7
(22) Date of filing: 15.11.2021
(51) Int. Cl.: A61C 7/34

(54) **NOVEL SELF-LIGATING ORTHODONTIC BRACKET**

(30) Priority: 04.11.2021 CN 202111299256
(71) Applicant: Hangzhou Pengwu Medical Equipment Co., Ltd., Hangzhou, Zhejiang 310000 (CN)
(72) Inventor: YIN, Gang, Hangzhou, Zhejiang 310000 (CN)
(74) Representative: Chung, Hoi Kan
(86) International application number: PCT/CN2021/130700
(87) International publication number: WO 2023/077556

(57) **Abstract**

A novel self-ligating orthodontic bracket, belongs to the technical field of orthodontics. The novel self-ligating orthodontic bracket comprises a base plate and a bracket body (1). The bracket body (1) is provided with an archwire recess (3), and one side of the archwire recess (3) is provided with a self-ligating recess (4). A locking piece (2) is slidably disposed in the self-ligating recess (4). An elastic locking mechanism is disposed in the self-ligating recess (4). And the elastic locking mechanism is mounted below the locking piece (2) so as to provide, in a locked state, a locking force for preventing the locking piece (2) from sliding. Thus, the shortcomings in the existing technology are overcome. The locking of the locking piece (2) is achieved by using the elastic locking mechanism. The structure is simple, operation is convenient and welding or punching is avoided in a structure formed by molding. The structural strength of the orthodontic bracket is increased and the ligation space below a bracket ligation wing is greatly increased.

## Description

### Technical field

The present invention relates to the technical field of orthodontics, specifically a novel self-ligating orthodontic bracket.

### Background technology

Orthodontic brackets are important components for orthodontic alignment and repositioning, and are devices used for correcting malocclusions of the teeth, by sticking the orthodontic brackets directly to the teeth, using an archwire to apply a force in correcting irregularities on the teeth via the orthodontic brackets, the purpose of tooth alignment and correction can be achieved. The self-ligating orthodontic brackets belong to a novel type of tooth alignment devices developed on the basis of conventional brackets, and are characterized by small frictional resistance between the archwire and the brackets, fast treatment time, easy to clean, and comfortable to wear, and are considered to be to be a new tooth straightening method which offers higher efficiency and is easier.

Currently, structures of many self-ligating orthodontic brackets are complex, the brackets need welding or drilling, which affects the structural strength of the brackets, as a result, upon long-term usage, the brackets are susceptible to falling off, further, as the locking structures are generally positioned underneath the ligation wings, the ligation space of the orthodontic brackets are significantly reduced.

### Summary of the invention

### Technical solutions

A purpose of the present invention is to provide a novel self-ligating orthodontic bracket, to overcome the deficiency of the prior art and achieve fixture of the locking piece by a flexible ligating mechanism, the structure thereof is simple, the operation is convenient, and by forming by molding, welding and drilling is avoided, the structural strength of the orthodontic bracket is improved, and the ligation space underneath the ligation wings is increased significantly.

To address the foregoing problems, the technical solutions adopted in the present invention are:
A novel self-ligating orthodontic bracket, comprises a base plate and a bracket body, wherein an archwire receiver is provided on the bracket body, a self-ligating slot is provided at a side of the archwire receiver, a locking piece is slidably provided in the self-ligating slot, a flexible ligation mechanism is provided in the self-ligating slot, the flexible ligation mechanism is provided underneath the locking piece, and is configured to provide a locking force for preventing the locking piece from sliding. Further, the flexible ligation mechanism comprises a locking boss and a limiting stop provided in the self-ligation slot, and a flexible self-ligating piece embedded underneath the locking piece, a transverse installation groove is provided in a lower end surface of the locking piece, the flexible self-ligation piece is provided in the installation groove, and when locked, a space for housing the flexible self-ligating piece and limit passage of the flexible self-ligating piece is formed in between the locking boss and the lower end surface of the locking piece.

Further, the limiting stop is provided at an end of the self-ligating slot far away from the archwire receiver.

Further, an arc-shaped groove for allowing the locking boss and the limiting stop to pass is provided in the lower end surface of the locking piece, and a groove for allowing the flexible self-ligating piece to deform is provided at a side of the installation groove close to the locking piece.

Further, the flexible ligating mechanism comprises a flexible self-ligating piece embedded at an end portion of the self-ligating groove far from the archwire receiver, a positioning stop provided at a side of the flexible self-ligating piece and a locking boss provided on a lower end surface of the locking piece.

Further, a through-groove for allowing the locking boss to pass is provided in an intermediate portion of the self-ligating slot, a hollow structure for allowing the flexible self-ligating piece to deform is provided underneath the flexible self-ligating piece.

Further, a positioning stop is provided at a side of the locking boss far from the flexible self-ligating piece.

Further, the flexible self-ligating piece comprises flexible circular wire, circular tube, square wire or square tube.

Further, a cross-section of the locking boss comprises a rounded triangle.

Further, sliding slots are provided at both sides of the self-ligating groove, sliding blocks corresponding to the sliding slots are provided at both sides of the locking piece, and the sliding blocks slidingly engage with the sliding slots.

### Beneficial effects of the present invention

Compared with the prior art, the present invention has the following beneficial effects:
1. By the use of the flexible ligation mechanism, with the flexible self-ligating piece and the locking boss the locking piece can be locked, the operation is convenient, the tedious operation of ligation of wires is avoided, the dental correction treatment can have better effects and the space underneath the ligation wings of the orthodontic brackets is significantly improved.
2. In the present invention, the bracket body and the locking piece are formed by molding, without requiring additional welding or drilling work, the structural strength of the bracket body is improved and the orthodontic bracket offered in the present invention is suitable for use in metal brackets and ceramic brackets.

### Brief description of the drawings

Figure 1 is a structural diagram showing a novel self-ligating orthodontic bracket.
Figure 2 is a structural diagram showing a locking piece of the novel self-ligating orthodontic bracket.
Figure 3 is a structural diagram showing the self-ligating orthodontic bracket in embodiment 2.
Figure 4 is a structural diagram showing the locking piece in the embodiment 2.
Figure 5 is a cross-sectional diagram showing the embodiment 2.

In the drawings: 1 bracket body; 2 locking piece; 3 archwire receiver; 4 self-ligating slot; 5 sliding slot; 6 limiting stop; 7 locking boss; 8 sliding block; 9 flexible self-ligating piece; 10 arch-shaped groove; 11 installation groove; 12 groove; 13 positioning stop; and 14 through-groove.

### Embodiments

Hereinafter a clear and complete description will be given to the technical solutions in the embodiments of the present invention in conjunction with the drawings of the embodiments of the present invention, apparently, the embodiments given here are only some of the embodiments of the present invention, rather than all. Based on the embodiments of the present invention, all the other embodiments obtained by those of ordinary skill in the art without paying creative effort fall into the protection scope of the present invention.

### Embodiment 1

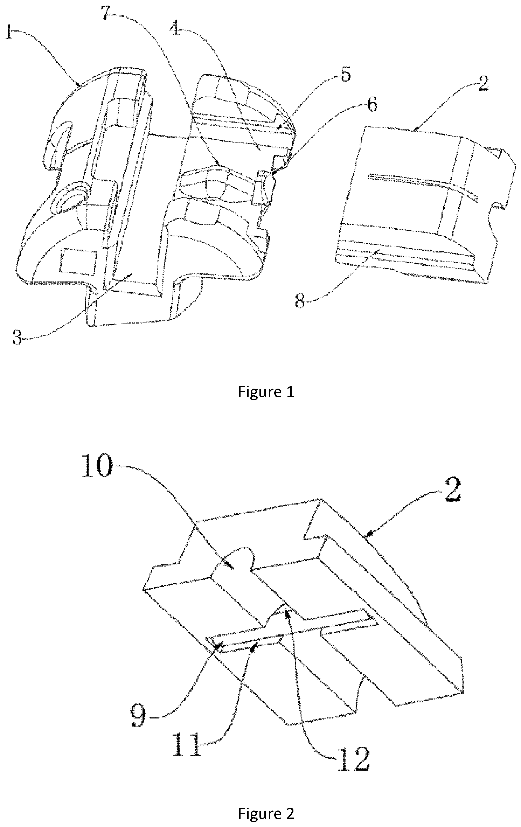

As shown in figures 1-2, the present invention provides a novel self-ligating orthodontic bracket, comprising a bracket body 1, an archwire receiver 3 is provided on the bracket body 1, a self-ligating slot 4 is slidably provided at a side of the archwire receiver 3, a locking piece 2 is slidably provided in the self-ligating slot 4, a flexible locking mechanism is provided in the self-ligating slot 4, the flexible ligating mechanism is provided underneath the locking piece 2 and is configured to provide a locking force for stopping the locking piece 2 from sliding.

The flexible locking mechanism comprises a locking boss 7 and a limiting stop 6 provided in the self-ligating slot 4, and a flexible self-ligating piece 9 embedded underneath the locking piece 2, a transverse installation groove 11 is opened at a lower end surface of the locking piece 2, the flexible self-ligating piece 9 is provided in the installation groove 11, when being locked, a space for housing the flexible self-ligating piece 9 and limiting passage of the flexible self-ligating piece 9 is provided in between the locking boss 7 and the locking piece 2; and the limiting stop 6 is provided at an end portion of the self-ligation slot far away from the archwire receiver 3.

An arch-shaped groove 10 for housing the locking boss 7 and allowing the limiting stop 6 to pass is opened at a lower end surface of the locking piece 2, a groove 12 for allowing the flexible self-ligating piece 9 to deform is opened at a side of the installation groove 11 close to the locking piece 2.

The flexible self-ligating piece 9 comprises flexible round wire, round tube, square wire or square tube and is made of metal or plastic materials.

To ease use, a cross section of the locking boss 7 is a rounded triangle; and by configuration of the rounded triangle passage of the flexible self-ligating piece 9 through the locking boss 7 is smoother.

To make the sliding more stable, sliding slots 5 are provided at both sides of the self-ligating slot 4, sliding blocks corresponding to the sliding slots 5 are provided at both sides of the locking piece 2 and the sliding blocks 8 slidingly engage with the sliding slots 5.

A usage process of the present embodiment: by sliding the sliding blocks 8 along the sliding slots 5 at both sides of the locking piece 2 towards the archwire receiver, the locking boss 7 extrudes the flexible self-ligating piece 9, so that the flexible self-ligating piece 9 deforms towards the groove 12, until the flexible self-ligating piece 9 passes the locking boss 7, a front surface of the locking boss 7 limits a moving direction of the locking piece 2 and maintain the locking piece 2 in a closed state.

### Embodiment 2

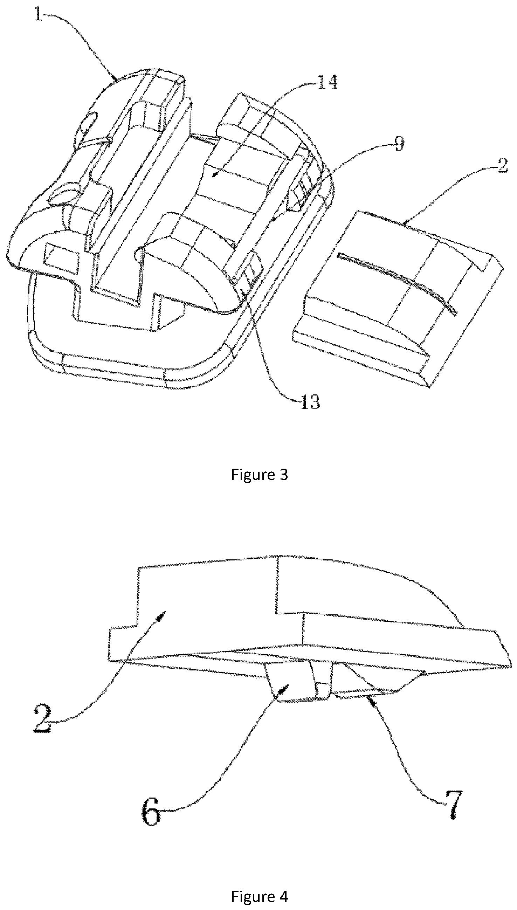

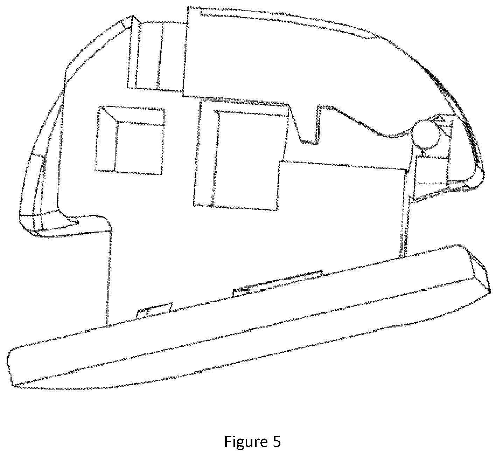

As shown in figures 3-5, a different flexible ligating mechanism from the one in embodiment 1 is used in the present embodiment, the flexible ligating mechanism comprises a flexible self-ligating piece 9 provided at an end portion of the self-ligating slot 4 away from the archwire receiver 3, a positioning stop 13 provided at a side of the flexible self-ligating piece 9, and a locking boss 7 provided at a lower end surface of the locking piece 2; a through-groove 14 for allowing the locking boss 7 to pass is opened at an intermediate portion of the self-ligating slot 4, and a hollow structure for allowing the flexible self-ligating piece 9 to deform is provided underneath the flexible self-ligating piece 9, and a limiting stop 6 is provided at a side of the locking boss 7 far away from the flexible self-ligating piece 9.

A usage process of the present embodiment: by sliding the sliding blocks 8 on the locking piece 2 along the sliding slots 5 towards the archwire receiver, the locking stop 7 extrudes the flexible self-ligating piece 9, so that the flexible self-ligating piece 9 deforms towards a hollow side of the self-ligating slot 4, until the locking boss 7 passes the flexible self-ligating piece 9, by engagement of the flexible self-ligating piece 9 and a rear surface of the locking boss 7, the moving direction of the locking piece 2 is limited and the locking piece 2 maintained closed.

For those skilled in the art, apparently, the present invention is not restricted to details of the foregoing exemplary embodiments, and without departing from the spirit and basic features of the present invention, the present invention can be implemented in other specific forms. Therefore, no matter viewing from any point, the embodiments shall be taken as exemplary rather than restrictive, the scope of the present invention is defined by the appended claims rather than the foregoing description, therefore, all variations that fall into the contents and scope of equivalents of the claims are intended to be covered in the present invention. The drawing reference signs in the claims shall not be construed to limit the corresponding claims.

## Claims

1. A novel self-ligating orthodontic bracket, comprises a base plate and a bracket body (1), wherein an archwire receiver (3) is provided in the bracket body (1), a self-ligating slot (4) is provided at a side of the archwire receiver (3), a locking piece (2) is slidably provided in the self-ligating slot (4), wherein a flexible ligating mechanism is provided in the self-ligating slot (4), the flexible ligating mechanism is installed underneath the locking piece (2) and is configured to provide a locking force for stopping the locking piece (2) from sliding during ligation.

2. The novel self-ligating orthodontic bracket according to claim 1, wherein, the flexible ligating mechanism comprises a locking boss (7) and a limiting stop (6) provided in the self-ligating slot (4), and a flexible self-ligating piece (9) embedded underneath the locking piece (2), a transverse installation groove (11) is opened at a lower end surface of the locking piece (2), the flexible self-ligating piece (9) is provided in the installation groove (11); when being locked, a space for housing the flexible self-ligating piece (9) and restricting passage of the flexible self-ligating piece (9) is formed in between the locking boss (7) and the locking piece (2).

3. The novel self-ligating orthodontic bracket according to claim 2, wherein, the limiting stop (6) is provided at an end portion of the self-ligating slot (4) away from the archwire receiver (3).

4. The novel self-ligating orthodontic bracket according to claim 2, wherein, an arc-shaped groove (10) for allowing the locking boss (7) and the limiting stop (6) to pass is opened at the lower end surface of the locking piece (2), and a groove (12) for allowing the flexible self-ligating piece (9) to deform is opened at a side of the installation groove (11) close to the locking piece (2).

5. The novel self-ligating orthodontic bracket according to claim 1, wherein, the flexible ligating mechanism comprises a flexible self-ligating piece (9) embedded at an end portion of the self-ligating slot (4) away from the archwire receiver (3), a positioning stop (13) is provided at a side of the flexible self-ligating piece (9) and a locking boss (7) provided at a lower end surface of the locking piece (2).

6. The novel self-ligating orthodontic bracket according to claim 5, wherein, a through-groove (14) for allowing the locking boss (7) to pass is opened at an intermediate portion of the self-ligating slot (4) and a hollow structure for allowing the flexible self-ligating piece (9) to deform is provided underneath the flexible self-ligating piece (9).

7. The novel self-ligating orthodontic bracket according to claim 6, wherein, a limiting stop (6) is provided at a side of the locking boss (7) away from the flexible self-ligating piece (9).

8. The novel self-ligating orthodontic bracket according to any of claims 2-7, wherein the flexible self-ligating piece (9) comprises flexible round wire, round tube, square wire or square tube.

9. The novel self-ligating orthodontic bracket according to claim 8, wherein a cross-section of the locking boss (7) is a rounded triangle.

10. The novel self-ligating orthodontic bracket according to claim 1, wherein sliding slots (5) are provided at both sides of the self-ligating slot (4), sliding blocks (8) corresponding to the sliding slots (5) are provided at both sides of the locking piece (2) and the sliding blocks (8) slidingly engage with the sliding slots (5).
